(19) **Europäisches Patentamt / European Patent Office / Office européen des brevets**

(11) **EP 2 926 399 B1**

(12) **EUROPÄISCHE PATENTSCHRIFT**

(45) Veröffentlichungstag und Bekanntmachung des Hinweises auf die Patenterteilung:
**13.06.2018  Patentblatt 2018/24**

(51) Int Cl.:
*H01M 8/02* (2016.01)       *H01M 8/24* (2016.01)
*H01M 8/10* (2016.01)       *H01M 8/04* (2016.01)

(21) Anmeldenummer: **13777021.0**

(22) Anmeldetag: **11.10.2013**

(86) Internationale Anmeldenummer:
**PCT/EP2013/071303**

(87) Internationale Veröffentlichungsnummer:
**WO 2014/082784 (05.06.2014 Gazette 2014/23)**

(54) **BRENNSTOFFZELLE MIT STRÖMUNGSVERTEILER**

FUEL CELL COMPRISING FLOW DISTRIBUTOR

PILE À COMBUSTIBLE COMPRENANT UN DISTRIBUTEUR DE FLUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2012  DE 102012221676**

(43) Veröffentlichungstag der Anmeldung:
**07.10.2015  Patentblatt 2015/41**

(73) Patentinhaber: **Bayerische Motoren Werke Aktiengesellschaft**
**80809 München (DE)**

(72) Erfinder:
- **BAUER, Michael**
  **85774 Unterföhring (DE)**
- **BUCHNER, Andreas**
  **82237 Steinebach (DE)**
- **HAASE, Stefan**
  **80807 München (DE)**

(56) Entgegenhaltungen:
**EP-A1- 1 557 894       EP-A1- 1 970 985**
**US-A1- 2009 162 733    US-A1- 2011 207 018**

**Beschreibung**

Die Erfindung betrifft eine Brennstoffzelle, insbesondere eine Polymerelektrolyt-Brennstoffzelle (Polymer Electrolyte Fuel Cell (PEFC), Proton Exchange Membrane Fuel Cell (PEMFC)), mit einem Anoden-Kathoden-Stapel, der mindestens eine aktive Flächenschicht umfasst, die mit einer ersten Kanalstruktur mit einem ersten und mindestens einem zweiten Kanal zum Leiten eines ersten Fluids über die mindestens eine aktive Flächenschicht des Anoden-Kathoden-Stapels gebildet ist, und bei der eine erste Verteilerstruktur zum Verteilen des ersten Fluids in den ersten und den mindestens einen zweiten Kanal der Kanalstruktur vorgesehen ist. Ferner betrifft die Erfindung ein Verfahren zum Betreiben einer Brennstoffzelle mit einem Anoden-Kathoden-Stapel, der eine aktive Flächenschicht umfasst, die von einer ersten Kanalstruktur mit mindestens zwei Kanälen zum Leiten eines ersten Fluids über die aktive Flächenschicht gebildet ist.

Die Druckschriften EP 1 970 985 A1, US 2011/207018 A1, US 2009/162733 A1 und EP 1 557 894 A1 offenbaren vorbekannte Lösungen.

Brennstoffzellen, insbesondere solche von Hybrid-Kraftfahrzeugen, sind in bekannter Weise mit einem Anoden-Kathoden-Stapel (Bipolar-Plattenstapel) mit einer Vielzahl Anoden und Kathoden versehen, die jeweils eine Schicht des Stapels bilden und mittels einer dazwischen angeordneten Membran getrennt sind. Damit in der Membran ein Protonentransport stattfinden kann, müssen in die jeweilige Schicht als Reaktionsfluide Wasserstoff (in Form von Gas) und Sauerstoff (in Form von Luft) sowie gegebenenfalls ein Kühlmittel (in Form von Flüssigwasser) zugeführt werden. Dazu ist es vorgesehen, dass an dem Anoden-Kathoden-Stapel mindestens eine Kanalstruktur für die jeweilige Schicht vorgesehen ist, die mittels einer Vielzahl an Kanälen diese Fluide über die aktive Fläche leitet. Ferner ist am Rand dieser Kanalstruktur eine Verteilerstruktur ausgebildet, mittels der das jeweilige Fluid in die Kanäle hinein verteilt wird.

Gemäß der Erfindung ist eine Brennstoffzelle mit einem Anoden-Kathoden-Stapel geschaffen, der mindestens eine aktive Flächenschicht umfasst, die mit einer ersten Kanalstruktur mit einem ersten und mindestens einem zweiten Kanal zum Leiten eines ersten Fluids über die mindestens eine aktive Flächenschicht des Anoden-Kathoden-Stapels gebildet ist, und bei der eine erste Verteilerstruktur zum Verteilen des ersten Fluids in den ersten und den mindestens einen zweiten Kanal der ersten Kanalstruktur vorgesehen ist, wobei die erste Verteilerstruktur mit einem ersten, dem ersten Kanal zugeordneten Flächenbereich und einem zweiten, dem zweiten Kanal zugeordneten Flächenbereich gestaltet ist, und wobei die beiden Flächenbereiche mit unterschiedlich großen Strömungswiderständen für das in der ersten Verteilerstruktur verteilte erste Fluid gestaltet sind.

Die erfindungsgemäße Lösung verbessert die fluiddynamische Situation der an einem Anoden-Kathoden-Stapel einer Brennstoffzelle über deren aktive Fläche zu leitenden Fluide. Sie basiert auf der Erkenntnis, dass in den Kanälen der Flächenschicht das jeweilige Fluid grundsätzlich weitgehend laminar strömt. Für solche Strömungen gilt die Kontinuitätsgleichung:

$$\frac{\partial \rho}{\partial t} + \operatorname{div}(\rho \vec{v}) = 0$$

(mit der Massendichte $\rho$ und dem Geschwindigkeitsvektor $\vec{v}$).

Diese Gleichung sagt aus, dass der Massenfluss durch eine geschlossene Fläche immer gleich der Veränderung der Masse im Inneren der Fläche sein muss. Leitet man in einen Kanal ein Fluid ein, ohne dass sich im Inneren des Kanals die Masse des Fluids verändert, so muss die gleiche Menge Fluid am Ende des Kanals herauskommen, wie hinein fließt. Wird der Kanal an einer Stelle verengt, muss immer noch die gleiche Menge Fluid am Ende heraus kommen. Dies bedeutet, dass das Fluid im engeren Kanalbereich schneller fließen muss als im breiteren.

Umgekehrt ergibt sich, dass, wenn unterschiedlich große Mengen an Fluid in mehrere, gleich große Kanäle geleitet werden, die Fluide in den Kanälen unterschiedlich schnell fließen. Derart unterschiedlich schnelle Strömungen würden bei der der Erfindung zugrundeliegenden Kanalstruktur zu einer ungleichmäßigen Versorgung der zugehörigen aktiven Flächen führen.

Mit der erfindungsgemäßen Lösung wird stattdessen in der Verteilerstruktur die Strömungssituation vor dem jeweiligen Kanal so gestaltet, dass die pro Zeiteinheit in die Kanäle verteilte Fluidmenge weitgehend gleich groß ist.

Der Strömungswiderstand ist die physikalische Größe, die die Kraft bezeichnet, die einer Bewegung entgegengesetzt wird. So erfährt ein Körper, der sich relativ zu einem Fluid (gasförmiges und/oder flüssiges Medium) bewegt, einen Strömungswiderstand, und umgekehrt erfährt ein Fluid einen Strömungswiderstand, wenn es unter Druck durch einen Kanal gefördert wird. Der Strömungswiderstand wirkt als eine der Relativgeschwindigkeit entgegengesetzte Kraft.

Auf die Oberfläche eines umströmten oder durchströmten Körpers wirkt die Strömung örtlich verschieden Schubspannung und Druck (Normalspannung) aus. Das Aufintegrieren von Druck und Schubspannung über die gesamte Oberfläche führt auf die resultierende Kraft, die als Strömungswiderstand wirkt.

Es sind also die physikalischen Größen Druck und Schubspannung, die an der Oberfläche eines Körpers wirken und damit zum Strömungswiderstand beitragen können. Dementsprechend kann der Strömungswiderstand in einen Druckwiderstand und einen Reibungswiderstand aufgeteilt werden. In Abhängigkeit von der Form des umströmten bzw. durchströmten Körpers kann der Druckwiderstand oder der Reibungswiderstand überwiegen.

Der Druckwiderstand folgt aus der Druckverteilung (Normalspannung) um einen Körper bzw. in einem Körper. Die wirksame Fläche dieses Widerstandes ist die projizierte Fläche in Richtung der Anströmung.

Der Reibungswiderstand (Flächenwiderstand) ist das Ergebnis der Reibung, also des viskosen Impulsaustausches. Der Reibungswiderstand beruht auf den Schubspannungen, die auf der Oberfläche des Körpers auftreten, indem die Strömung über die Oberfläche streicht.

Mit der erfindungsgemäßen Lösung wird in der Verteilerstruktur in der Zuströmung zu mindestens zwei Kanälen der Kanalstruktur je ein Flächenbereich mit unterschiedlich großem Strömungswiderstand vorgesehen. Diese unterschiedlich großen Strömungswiderstände ermöglichen es, dass das zuzuführende Fluid in den beiden Flächenbereichen unterschiedlich schnell und damit je Zeiteinheit unterschiedlich weit strömen kann. Auf diese Weise kann sichergestellt werden, dass zu den mindestens zwei Kanälen unterschiedlich lange Zuström- bzw. Verteilerleitungen vorgesehen sein dürfen und dennoch in beiden Kanälen nachfolgend die gleichen Strömungsgeschwindigkeiten vorliegen.

Besonders nutzt die Erfindung bei dieser Gestaltung, dass hinsichtlich der Bewegung eines Fluids im Falle von kleiner Viskosität die Reibungseffekte vernachlässigt werden können und in guter Näherung die Euler-Gleichung gilt:

$$\frac{\partial \vec{v}}{\partial t} + (\vec{v} \cdot \nabla)\vec{v} = -\frac{\nabla p}{\rho}$$

Diese Gleichung bringt die Geschwindigkeitsänderung des Fluids an einem Ort mit dem in der Umgebung herrschenden Druck $p$ in Verbindung. Sie ist also die Bewegungsgleichung des Fluids bei hoher Reynolds-Zahl.

Vorzugsweise wird daher der Reibungswiderstand über den ersten und den zweiten Flächenbereich erfindungsgemäß weitgehend vernachlässigt (z.B. obwohl diese beiden Bereiche stark unterschiedlich großflächig sein können) und es wird dann allein mit dem Druckwiderstand gearbeitet. Dazu wird der unterschiedlich große Strömungswiderstand für das in der ersten Verteilerstruktur verteilte erste Fluid in besonders einfacher Weise mittels einer unterschiedlich großen Strömungsschichtdicke für das im ersten Flächenbereich und das im zweiten Flächenbereich strömende Fluid gestaltet. Unter Strömungsschichtdicke wird dabei die Dicke der Schicht verstanden, in der das erste Fluid über den jeweiligen Flächenbereich strömen kann. Mit anderen Worten ist es die Dicke der dann in der Regel rechteckigen Strömungsquerschnittsfläche über dem jeweiligen Flächenbereich. Die derartige Änderung der Strömungsquerschnittfläche in Grundflussrichtung des Fluids kann zusätzlich auch mittels Einprägungen bzw. Einbauten in den Flächenbereichen hergestellt sein. Solche Einbauten können verschiedenste Form, z.B. Kegelform, aufweisen und insbesondere auch die Funktion von Abstandshaltern übernehmen. Ferner kann die Änderung der Strömungsquerschnittfläche vorteilhaft sich in der Grundflussrichtung sprunghaft und/oder kontinuierlich ändernd, z.B. als schiefe Ebene, gestaltet sein. Es ist ferner entsprechend der obigen Erläuterung an der ersten Verteilerstruktur eine erste Zuströmleitung zum Zuführen von Fluid zu der ersten Verteilerstruktur angeschlossen, der erste Kanal in einem von der ersten Zuströmleitung weiter entfernten Bereich der aktiven Flächenschicht angeordnet als der zweite Kanal und der Strömungswiderstand des ersten Flächenbereichs kleiner gestaltet, als der Strömungswiderstand des zweiten Flächenbereichs. Jenem Flächenbereich, der einen größeren Strömungsweg für das darüber strömende Fluid erfordert ist, damit der kleinere Strömungswiderstand zugeordnet. In Summe ergibt dies, dass die pro Zeiteinheit über die beiden Flächenbereiche strömenden Fluidmengen (sofern gewünscht) weitestgehend gleich groß gehalten werden können, so dass sich insgesamt in den nachfolgenden Kanälen ebenfalls gleichgroße Strömungsmengen und auch Strömungsgeschwindigkeiten einstellen.

Für eine möglichst gleichmäßige Einleitung von Fluid in eine vergleichsweise breitgefächerte Verteilerstruktur ist bevorzugt die erste Zuströmleitung mittig an einer Seite der ersten Verteilerstruktur angeordnet, der zweite Kanal in einem zugehörigen Mittenbereich der aktiven Flächenschicht angeordnet sowie der erste Kanal diesbezüglich in einem Randbereich der aktiven Flächenschicht angeordnet. Von der ersten Zuströmleitung aus kann das Fluid dann vorteilhaft an deren beiden Seiten auseinander gefächert weiter verteilt werden. Auf diese Weise sind innerhalb der Verteilerstruktur die erforderlichen Strömungswege noch vergleichsweise wenig unterschiedlich lang.

Zum Erzeugen des größeren Strömungswiderstands im zweiten Flächenbereich ist dort vorzugsweise eine in der Draufsicht V-förmige Verringerung der Strömungsschichtdicke für das im zweiten Flächenbereich strömende Fluid vorgesehen. Die V-Form schaffte einen sich nach zwei Seiten aufspreizenden bzw. auffächernden Bereich geringerer Strömungsschichtdicke, so dass von einer Zuströmseite ausgehend (an der Spitze der V-Form) eine Mehrzahl Kanäle (an der Breitseite der V-Form) mit dieser verringerten Strömungsschichtdicke angeströmt werden.

Die erste Kanalstruktur ist vorzugsweise mit mindestens zwei Kanälen zum Leiten eines ersten Fluids über die aktive Flächenschicht gegenüber einer zweiten Kanalstruktur mit mindestens zwei weiteren Kanälen zum Leiten eines zweiten Fluids über die aktive Flächenschicht mittels einer ersten Bipolarplatte abgegrenzt und die in der Draufsicht V-förmige Verringerung der Strömungsschichtdicke ist dann bevorzugt im zweiten Flächenbereich mittels einer Auswölbung dieser ersten Bipolarplatte hergestellt. Die Bipolarplatte ist bevorzugt eine Folie, vorzugsweise mit einer Dicke von ca. 0,05 bis 0,15 mm, und grenzt als solche die Strömungswege mehrerer Fluide, insbesondere von zugeleitetem Wasserstoff und zugeleitetem Sauerstoff, voneinander ab. Die in dieser Folie erfindungsgemäß ausgeprägte Auswölbung führt dann in dem einen Strömungsweg zu einer geringeren Strömungsschichtdicke, während in dem anderen Strömungsweg entsprechend die Strömungsschichtdicke in dem zugehörigen Flächenbereich vergrößert sein kann. Diese Vergrößerung kann vorteilhaft für die Anströmung von Kanälen im zweiten Strömungsweg genutzt werden oder sie ist zumindest unschädlich, indem die dortigen Kanäle entsprechend so gestaltet werden, dass sich dieser dann dickere Anströmungsbereich auf deren Anströmung nicht negativ auswirkt.

Die zweite Kanalstruktur ist vorteilhaft mit mindestens zwei weiteren Kanälen zum Leiten eines zweiten Fluids über die aktive Flächenschicht gegenüber einer dritten Kanalstruktur mit mindestens nochmals zwei weiteren Kanälen zum Leiten eines dritten Fluids über die aktive Flächenschicht mittels einer zweiten Bipolarplatte abgegrenzt. Mit der derartigen zweiten Bipolarplatte wird es möglich, der einzelnen Flächenschicht insgesamt drei Fluide getrennt zuzuführen.

In der zweiten Bipolarplatte ist dann vorzugsweise ebenfalls eine in der Draufsicht V-förmige Auswölbung vorgesehen. Die derartige Auswölbung schafft in zugehörigen Flächenbereichen für das dort zugeführte weitere Fluid die gleichen Vorteile, wie sie oben für das erste Fluid erläutert wurden. Bei einer entsprechenden Anpassung der beiden V-förmigen Auswölbungen wird es auch möglich, zwischen diesen Auswölbungen eine Strömungsschichtdicke zu schaffen, die eine insgesamt konstante Dicke aufweist. Besonders bevorzugt ist dazu die Auswölbung in der zweiten Bipolarplatte in der Draufsicht innerhalb der Auswölbung in der ersten Bipolarplatte ausgebildet.

Gemäß der Erfindung ist schließlich in Entsprechung zu der oben erläuterten Vorrichtung ferner ein Verfahren zum Betreiben einer Brennstoffzelle mit einem Anoden-Kathoden-Stapel geschaffen. Die Brennstoffzelle umfasst dazu eine aktive Flächenschicht, die von einer ersten Kanalstruktur mit mindestens zwei Kanälen zum Leiten eines ersten Fluids über die aktive Flächenschicht gebildet ist. Das Verfahren selbst umfasst die Schritte: Verteilen des ersten Fluids in den ersten und den mindestens einen zweiten Kanal der ersten Kanalstruktur durch eine Verteilerstruktur hindurch, wobei das erste Fluid zu dem ersten Kanal durch die Verteilerstruktur mit einem unterschiedlich großen Strömungswiderstand gefördert wird, als zu dem zweiten Kanal.

Nachfolgend werden Ausführungsbeispiele der erfindungsgemäßen Lösung anhand der beigefügten schematischen Zeichnungen näher erläutert. Es zeigt:

Fig. 1    eine perspektivische Schnittansicht einer Flächenschicht eines Anoden-Kathoden-Stapels einer Brennstoffzelle gemäß dem Stand der Technik,

Fig. 2    eine perspektivische Ansicht einer Bipolarplatte einer ersten Ausführungsform einer Flächenschicht eines Anoden-Kathoden-Stapels einer Brennstoffzelle gemäß der Erfindung,

Fig. 3    eine perspektivische Schnittansicht einer zweiten Ausführungsform einer Flächenschicht eines Anoden-Kathoden-Stapels einer Brennstoffzelle gemäß der Erfindung,

Fig. 4    die Ansicht IV gemäß Fig. 3,

Fig. 5    eine perspektivische Schnittansicht einer dritten Ausführungsform einer Flächenschicht eines Anoden-Kathoden-Stapels einer Brennstoffzelle gemäß der Erfindung,

Fig. 6    die Ansicht VI gemäß Fig. 5,

Fig. 7    eine perspektivische Schnittansicht einer vierten Ausführungsform einer Flächenschicht eines Anoden-Kathoden-Stapels einer Brennstoffzelle gemäß der Erfindung,

Fig. 8    die Ansicht VIII gemäß Fig. 7,

Fig. 9    eine perspektivische Schnittansicht einer fünften Ausführungsform einer Flächenschicht eines Anoden-Kathoden-Stapels einer Brennstoffzelle gemäß der Erfindung und

Fig. 10    die Ansicht X gemäß Fig. 9.

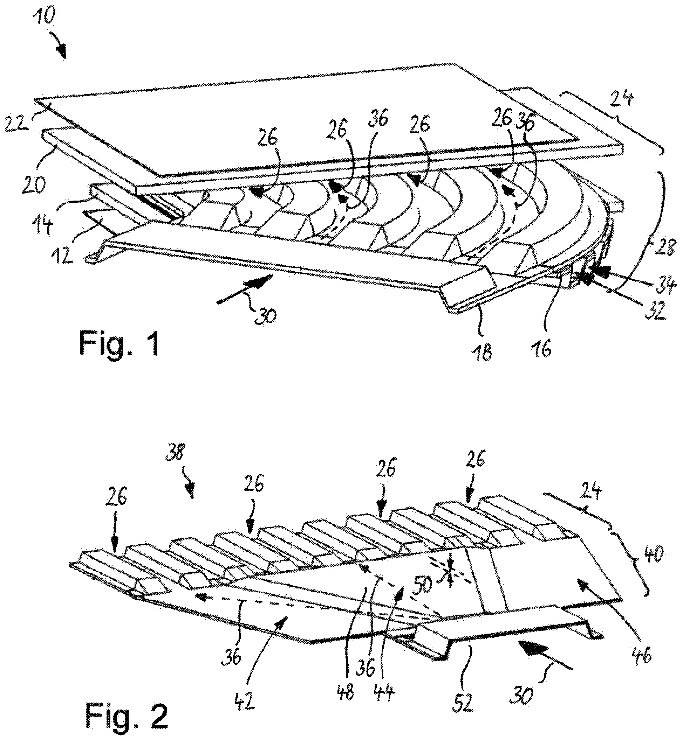

In Fig. 1 ist eine Flächenschicht 10 eines weiter nicht veranschaulichten Anoden-Kathoden-Stapels einer Brennstoffzelle für ein Kraftfahrzeug, insbesondere ein Hybridkraftfahrzeug gemäß dem Stand der Technik veranschaulicht. Die Flächenschicht 10 umfasst in aufeinanderliegenden Schichten eine untere Membran 12 als "Membran Electrode Assembly", eine untere Gasdiffusionslage 14, eine untere Bipolarplatte 16, eine obere Bipolarplatte 18, eine obere Gasdiffusionslage 20 und eine obere Membran 22. Die Membranen 12 und 22 sowie die Gasdiffusionslagen 14 und 20 erstrecken sich dabei über eine aktive Fläche, innerhalb der die Bipolarplatten 16 und 18 Kanalstrukturen 24 mit jeweils einer Vielzahl Kanälen 26 bilden. Diesen Kanalstrukturen 24 vorgelagert befinden sich Verteilerstrukturen 28, die ebenfalls mit den Bipolarplatten 16 und 18 gebildet sind. Die Verteilerstrukturen 28 dienen dazu, insgesamt drei Fluide, nämlich Luft 30, flüssiges Kühlmittel 32 sowie gasförmigen Wasserstoff 34 ($H_2$) möglichst gleichmäßig in die Kanalstrukturen 24 zu verteilen.

Bei dieser Verteilung der Fluide 30, 32 und 34 besteht die Problematik, dass zugehörige Strömungswege 36 der Fluide innerhalb der Verteilerstrukturen 28 stark unterschiedlich lang sind. Damit ergeben sich in den Kanälen 26 schließlich unterschiedlich große Strömungsgeschwindigkeiten, was zu einer ungleichmäßigen Wirkung dieser Fluide an den zugehörigen aktiven Flächen der Gasdiffusionslagen 14 und 20 sowie der Membranen 12 und 22 führt.

Demgegenüber ist bei der in den Fig. 2 bis 4 dargestellten Bipolarplatte 38 die zugehörige Verteilerstruktur 40 anders gestaltet. Diese Verteilerstruktur 40 weist insgesamt drei nebeneinander liegende Flächenbereiche 42, 44 und 46 auf, von denen der mittlere Flächenbereich 44 mit einer Auswölbung 48 gestaltet ist. Die Auswölbung 48 ist als eine in der Draufsicht V-förmige, in der Seitenansicht trapezförmige Erhöhung gestaltet, mittels der der Flächenbereich 44 in Bezug auf die benachbarten Flächenbereiche 42 und 46 angehoben ist. Mit der Anhebung ergibt sich an der Oberseite der Bipolarplatte 38 und damit unter der oberen Membran 22 zugleich eine Verringerung einer dortigen Strömungsschichtdicke 50 für das damit in die zugehörige Kanalstruktur 24 und deren Kanäle 26 zuströmende Fluid Luft 30. Die Luft wird dabei durch eine mittig vor dem Flächenbereich 44 angeordneten Zuströmleitung 52 zugeführt.

Mit der derartigen Verteilerstruktur 40 ist für einen ersten Kanal 26, dem der Flächenbereich 42 zugeordnet ist, der Strömungsweg der Luft 30 in der Verteilerstruktur 40 ebenfalls länger als im Flächenbereich 44. Zugleich ist aber auch, wie oben erläutert mit der verrin-gerten Strömungsschichtdicke 50 der Strömungswider-stand der Luft 30 in dem Flächenbereich 42 geringer als im Flächenbereich 44. Strömungsweg und Strömungswiderstand sind dabei derart aufeinander abgestimmt, dass in dem einzelnen Kanal 26 der Kanalstruktur 24 pro Zeiteinheit weitestgehend die gleiche Menge an Fluid eintritt.

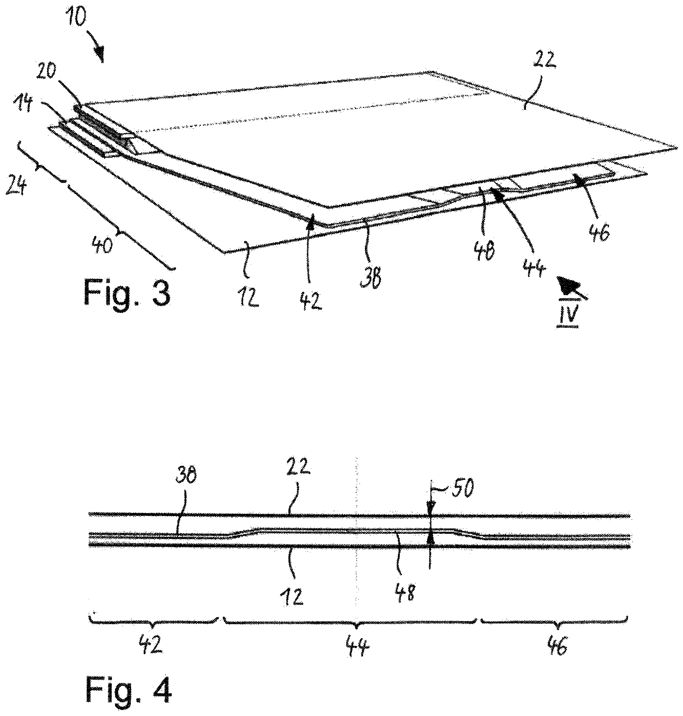

An der Unterseite der derartigen Bipolarplatte 38 gemäß der Erfindung kann dann, wie in den Fig. 3 und 4 veranschaulicht, als zweites Fluid Wasserstoff 34 durch die Verteilerstruktur 40 geleitet werden. Der Wasserstoff 34 wird dabei an den Seiten der Verteilerstruktur 40, also am Flächenbereich 42 und am Flächenbereich 44 seitlich eingeleitet. Die nach oben hin gerichtete Auswölbung 48 ist dann auch für die Zuströmung des Wasserstoffs 34 vorteilhaft, weil sich für die weiteren Strömungswege des Wasserstoffs 34 innerhalb der Verteilerstruktur 40 aufgrund der größeren Strömungsquer-schnitte dann geringere Strömungswiderstände erge-ben.

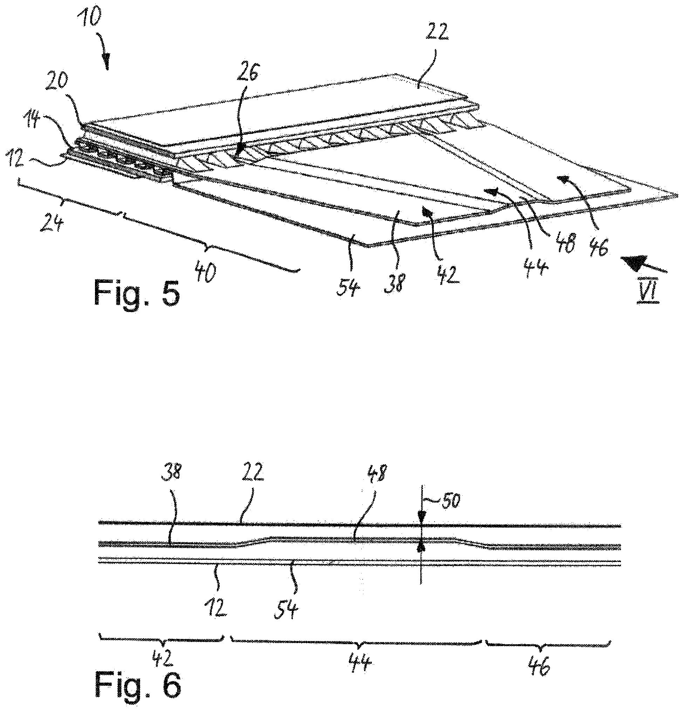

In den Fig. 5 und 6 ist eine Ausführungsvariante dargestellt, bei der sich unter einer derartigen Bipolarplatte 38 eine zweite Bipolarplatte 50 ebenfalls über die Fläche der Verteilerstruktur 40 hinweg erstreckt. Diese zweite Bipolarplatte 50 grenzt bzw. dichtet die Verteilerstruktur 40 nach unten hin gegenüber der unteren Membran 12 ab. Damit wird es möglich in der zwischen der Bipolarplatte 38 und der Bipolarplatte 50 entstehenden Fluidleitschicht insbesondere das Kühlmittel 32 über die Verteilerstruktur 40 hinweg zu den zugehörigen Kanälen 26 in den Kanalstrukturen 24 zu führen. Der Wasserstoff 34 wird bei dieser Ausführungsvariante mittels weiter nicht dargestellter Verteilstrukturen an den anderen Rändern der Kanalstruktur 24 zugeführt.

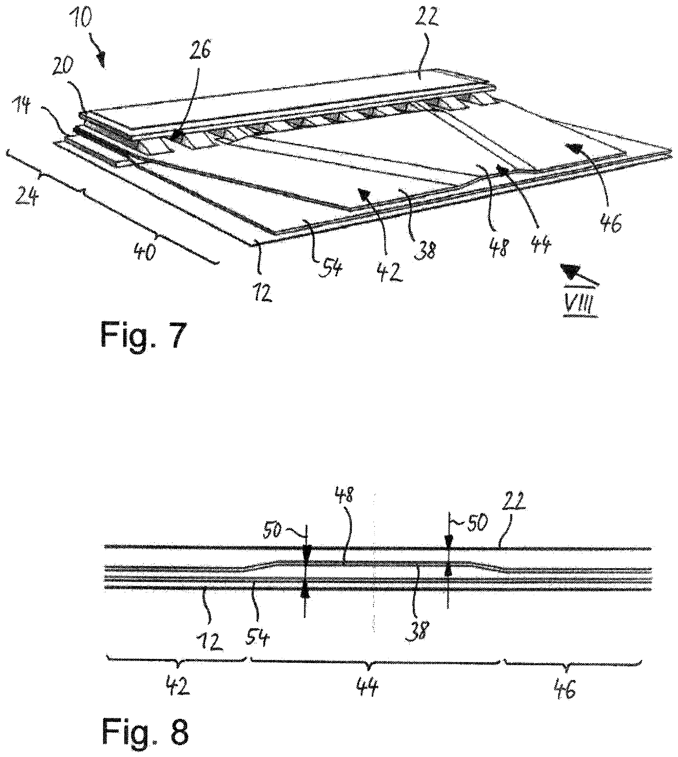

Die Fig. 7 und 8 zeigen eine Variante, bei der sich unter der zweiten Bipolarplatte 54 eine weitere Fluidleitschicht befindet, durch die hindurch Wasserstoff 34 geführt werden kann. Diese Fluidleitschicht erstreckt sich entsprechend zwischen der zweiten Bipolarplatte 54 und der unteren Membran 12 und kann dazu dienen, den Wasserstoff 34 unmittelbar in die nebengeordnete Kanalstruktur 24 zu leiten.

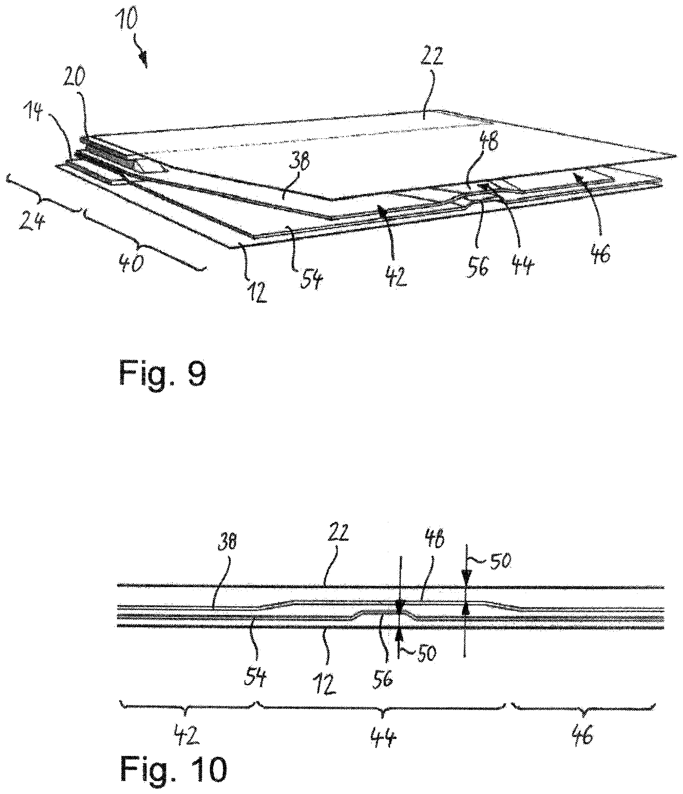

Um die derartige Zuleitung von Wasserstoff 34 weiter zu verbessern, ist es dann gemäß der in den Fig. 9 und 10 dargestellten Variante vorgesehen, dass auch die zweite Bipolarplatte 54 eine Auswölbung 56 aufweist. Die Auswölbung 56 ist in Entsprechung zur Auswölbung 48 ebenfalls nach oben hin gerichtet und weist dabei in der Draufsicht ebenfalls eine V-Form aus. In dieser Draufsicht liegt die Auswölbung 56 damit weitgehend deckungsgleich, aber etwas kleiner unter der Auswölbung 48. Zwischen den derart ausgewölbten Bipolarplatten 38 und 54 ergibt sich dann eine über die Flächenbereiche 42, 44 und 46 hinweg weitgehend konstant dicke Fluidleitschicht, die insbesondere zum Zuleiten des Kühlmittels 32 vorgesehen ist. Zugleich ergibt sich unter der Bipolarplatte 54 und deren Auswölbung 48 ein verringerter Strömungswiderstand für die Zuleitung zu den mittleren Kanälen 26 der zugehörigen Kanalstruktur 24. Dies führt, wie oben erläutert auch zu einer weiter verbesserten, gleichmäßigeren Zuführung von Wasserstoff 34 in die zugehörige Flächenschicht 10 der entsprechend gestalteten Brennstoffzelle.

**Bezugszeichenliste**

| | |
|---|---|
| 10 | Flächenschicht einer Brennstoffzelle |
| 12 | untere Membran |
| 14 | untere Gasdiffusionslage |
| 16 | untere Bipolarplatte gemäß dem Stand der Technik |
| 18 | untere Bipolarplatte gemäß dem Stand der Technik |
| 20 | obere Gasdiffusionslage |
| 22 | obere Membran |
| 24 | Kanalstruktur |
| 26 | Kanal |
| 28 | Verteilerstruktur gemäß dem Stand der Technik |
| 30 | Luft als erstes Fluid |
| 32 | Kühlmittel als weiteres Fluid |
| 34 | Wasserstoff als weiteres Fluid |
| 36 | Strömungsweg innerhalb der Verteilerstruktur |
| 38 | Bipolarplatte gemäß der Erfindung |
| 40 | Verteilerstruktur gemäß der Erfindung |
| 42 | Flächenbereich |
| 44 | Flächenbereich |
| 46 | Flächenbereich |
| 48 | Auswölbung |
| 50 | Strömungsschichtdicke |
| 52 | Zuströmleitung |
| 54 | Bipolarplatte gemäß der Erfindung |

56    Auswölbung

**Patentansprüche**

1.  Brennstoffzelle mit einem Anoden-Kathoden-Stapel, der mindestens eine aktive Flächenschicht (10) umfasst, die mit einer ersten Kanalstruktur (24) mit einem ersten und mindestens einem zweiten Kanal (26) zum Leiten eines ersten Fluids (30) über die mindestens eine aktive Flächenschicht (10) des Anoden-Kathoden-Stapels gebildet ist, und bei der stromauf der Kanalstruktur (24) eine erste Verteilerstruktur (40) zum Verteilen des ersten Fluids in den ersten und den mindestens einen zweiten Kanal (26) der Kanalstruktur (24) vorgesehen ist, wobei die erste Verteilerstruktur (40) mit einem dem ersten Kanal (26) zugeordneten, ersten Flächenbereich (42) und einem dem zweiten Kanal (26) zugeordneten, zweiten Flächenbereich (44) gestaltet ist, wobei die beiden Flächenbereiche (42, 44) mit unterschiedlich großem Strömungswiderstand für das in der ersten Verteilerstruktur (40) verteilte erste Fluid (30) gestaltet sind,
    wobei der unterschiedlich große Strömungswiderstand für das in der ersten Verteilerstruktur (40) verteilte erste Fluid (30) mittels einer unterschiedlich großen Strömungsschichtdicke (50) für das im ersten Flächenbereich (42) und das im zweiten Flächenbereich (44) strömende Fluid (30) gestaltet ist, und wobei an der ersten Verteilerstruktur (40) eine erste Zuströmleitung (52) zum Zuführen von Fluid (30) zu der ersten Verteilerstruktur (40) angeschlossen ist, der erste Kanal (26) in einem von der ersten Zuströmleitung (52) weiter entfernten Bereich der aktiven Flächenschicht (10) angeordnet ist als der zweite Kanal (26) und der Strömungswiderstand des ersten Flächenbereichs (42) kleiner gestaltet ist, als der Strömungswiderstand des zweiten Flächenbereichs (44).

2.  Brennstoffzelle nach Anspruch 1,
    bei der die erste Zuströmleitung (52) mittig an einer Seite der ersten Verteilerstruktur (40) angeordnet ist, der zweite Kanal (26) in einem zugehörigen Mittenbereich der aktiven Flächenschicht (10) angeordnet ist und der erste Kanal (26) diesbezüglich in einem Randbereich der aktiven Flächenschicht (10) angeordnet ist.

3.  Brennstoffzelle nach Anspruch 2,
    bei der zum Erzeugen des größeren Strömungswiderstands im zweiten Flächenbereich (44) dort eine in der Draufsicht V-förmige Verringerung der Strömungsschichtdicke (50) für das im zweiten Flächenbereich (44) strömende Fluid (30) vorgesehen ist.

4.  Brennstoffzelle nach Anspruch 3,
    bei der die erste Kanalstruktur (24) mit mindestens zwei Kanälen (26) zum Leiten eines ersten Fluids (30) über die aktive Flächenschicht (10) gegenüber einer zweiten Kanalstruktur (24) mit mindestens zwei weiteren, Kanälen (26) zum Leiten eines zweiten Fluids (32; 34) über die aktive Flächenschicht (10) mittels einer ersten Bipolarplatte (38) abgegrenzt ist und die in der Draufsicht V-förmige Verringerung der Strömungsschichtdicke (50) im zweiten Flächenbereich (44) mittels einer Auswölbung (48) dieser ersten Bipolarplatte (38) hergestellt ist.

5.  Brennstoffzelle nach Anspruch 4,
    bei der die zweite Kanalstruktur (24) mit mindestens zwei weiteren Kanälen (26) zum Leiten eines zweiten Fluids (32) über die aktive Flächenschicht (10) gegenüber einer dritten Kanalstruktur (24) mit mindestens nochmals zwei weiteren Kanälen (26) zum Leiten eines dritten Fluids (34) über die aktive Flächenschicht (10) mittels einer zweiten Bipolarplatte (54) abgegrenzt ist.

6.  Brennstoffzelle nach Anspruch 5,
    bei der in der zweiten Bipolarplatte (54) ebenfalls eine in der Draufsicht V-förmige Auswölbung (56) vorgesehen ist.

7.  Brennstoffzelle nach Anspruch 6,
    bei der die Auswölbung (56) in der zweiten Bipolarplatte (54) in der Draufsicht innerhalb der Auswölbung (48) in der ersten Bipolarplatte (38) ausgebildet ist.

**Claims**

1.  A fuel cell having an anode-cathode stack, which comprises at least one active surface layer (10), which is formed with a first channel structure (24) with a first and at least one second channel (26) for conducting a first fluid (30) over the at least one active surface layer (10) of the anode-cathode stack, and in which a first distributor structure (40), which is arranged upstream of the channel structure (24), for distributing the first fluid into the first and the at least one second channel (26) of the channel structure (24), is provided, wherein the first distributor structure (40) is formed with a first surface region (42) associated with the first channel (26) and with a second surface region (44) associated with the second channel (26), wherein the two surface regions (42, 44) are formed with different flow resistances for the first fluid (30) distributed in the first distributor structure (40),
    wherein the different flow resistance for the first fluid (30) distributed in the first distributor structure (40) is formed by means of different flow layer thicknesses (50) for the fluid (30) flowing in the first surface region (42) and for the fluid (30) flowing in the second surface region (44),
and wherein a first inflow line (52) for feeding fluid (30) to the first distributor structure (40) is connected to the first distributor structure (40), the first channel (26) is arranged in a region of the active surface layer (10) distanced further from the first inflow line (52) than the second channel (26), and the flow resistance of the first surface region (42) being lower than the flow resistance of the second surface region (44).

2. A fuel cell according to claim 1,
in which the first inflow line (52) is arranged centrally on one side of the first distributor structure (40), the second channel (26) is arranged in an associated middle region of the active surface layer (10), and the first channel (26) is arranged in an edge region of the active surface layer (10).

3. A fuel cell according to claim 2,
in which a reduction, which is V-shaped in plan view, of the flow layer thickness (50) for the fluid (30) flowing in the second surface region (44) is provided in the second surface region (44) in order to generate the greater flow resistance there.

4. A fuel cell according to claim 3,
in which the first channel structure (24) having at least two channels (26) for conducting a first fluid (30) over the active surface layer (10) is delimited by means of a first bipolar plate (38) with respect to a second channel structure (24) having at least two further channels (26) for conducting a second fluid (32; 34) over the active surface layer (10), and the reduction, which is V-shaped in plan view, of the flow layer thickness (50) in the second surface region (44) is produced by means of a protuberance (48) of this first bipolar plate (38).

5. A fuel cell according to claim 4,
in which the second channel structure (24) having at least two further channels (26) for conducting a second fluid (32) over the active surface layer (10) is delimited by means of a second bipolar plate (54) with respect to a third channel structure (24) having again at least two further channels (26) for conducting a third fluid (34) over the active surface layer (10).

6. A fuel cell according to claim 5,
in which a protuberance (56) which is V-shaped in plan view is likewise provided in the second bipolar plate (54).

7. A fuel cell according to claim 6,
in which the protuberance (56) in the second bipolar plate (54) in plan view is formed within the protuberance (48) in the first bipolar plate (38).

**Revendications**

1. Pile à combustible comprenant un empilement d'anodes et de cathodes qui comprend au moins une couche de surfaces active (10) formée avec une première structure de canal (24) ayant un premier canal et au moins un second canal (26) permettant de transférer un premier fluide (30) sur la couche de surface active (10) de l'empilement d'anodes et de cathodes, et, dans laquelle il est prévu, en amont de la structure de canal (24), une première structure de distribution (40) pour répartir le premier fluide dans le premier canal et dans le second canal (26) de la structure de canal (24), la première structure de répartition (40) étant équipée d'une première zone de surface (42) associée au premier canal (26), et d'une seconde zone de surface (44) associée au second canal (26), les deux zones de surface (42, 44) ayant une résistance hydraulique différente pour le premier fluide (30) réparti dans la première structure de distribution (40),
la différente résistance hydraulique pour le premier fluide (30) réparti dans la première structure de distribution (40) étant obtenue au moyen d'une différence d'épaisseur de la couche de circulation (50) pour le fluide (30) circulant dans la première zone de surface (42) et dans la seconde zone de surface (44), et sur la première structure de distribution (40) étant connectée, une première conduite d'entrée (52) permettant d'introduire le fluide (30) vers la première structure de distribution (40), le premier canal (26) étant situé dans une zone de la couche de surface active (10) plus éloignée de la première conduite d'entrée (52) que le second canal (26) et la résistance hydraulique de la première zone plane (42) étant inférieure à celle de la seconde zone de surface (44).

2. Pile à combustible conforme à la revendication 1,
dans laquelle la première conduite d'entrée (52) est située dans une position médiane sur un côté de la structure de répartition (40), le second canal (26) est situé dans une zone médiane associée de la couche de surface active (10) et par suite le premier canal (26) est monté dans une zone de bord de la couche de surface active (10).

3. Pile à combustible conforme à la revendication 2,
dans laquelle pour permettre d'obtenir la plus grande résistance hydraulique dans la seconde zone de surface (44), il y est prévu, une diminution en forme de V en vue de dessus de l'épaisseur de couche de circulation (50) pour le fluide (30) circulant dans la seconde zone de surface (44).

4. Pile à combustible conforme à la revendication 3,
dans laquelle la première structure de canal (24) comprenant au moins deux canaux (26) permettant de transférer un premier fluide (30) sur la couche de surface active (10) est délimitée, au moyen d'une première plaque bipolaire (38), par rapport à une seconde structure de canal (24) comprenant au moins deux autres canaux (26) permettant de transférer un second fluide (32, 34) sur la couche de surface active (10) et la diminution en forme de V en vue de dessus de l'épaisseur de la couche de circulation (50) dans la seconde zone de surface (44) est obtenue au moyen d'une courbure (48) de cette première plaque bipolaire (38).

5. Pile à combustible conforme à la revendication 4, dans laquelle la seconde structure de canal (24) comprenant au moins deux autres canaux (26) permettant de transférer un second fluide (32) sur la couche de surface active (10) est délimitée, au moyen d'une seconde plaque bipolaire (54) par rapport à une troisième structure de canal (24) comprenant, elle aussi, au moins deux autres canaux (26) permettant de transférer un troisième fluide (34) sur la couche de surface active (10).

6. Pile à combustible conforme à la revendication 5, dans laquelle il est également prévu dans la seconde plaque bipolaire (54) une courbure (56) en forme de V en vue de dessus.

7. Pile à combustible conforme à la revendication 6, dans laquelle la courbure (56) de la seconde plaque bipolaire (54) est formée en vue de dessus à la partie interne de la courbure (48) de la première plaque bipolaire (38).

Fig. 1

Fig. 2

**Fig. 3**

**Fig. 4**

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1970985 A1
- US 2011207018 A1
- US 2009162733 A1
- EP 1557894 A1